(19) Europäisches Patentamt
European Patent Office
Office européen des brevets

(11) Veröffentlichungsnummer : **0 085 654**
**B1**

(12) # EUROPÄISCHE PATENTSCHRIFT

(45) Veröffentlichungstag der Patentschrift : **19.08.87**

(51) Int. Cl.⁴ : **C 09 B 62/04**, C 09 B 62/503, D 06 P 3/66, D 06 P 3/10

(21) Anmeldenummer : **83810031.1**

(22) Anmeldetag : **24.01.83**

(54) **Reaktivfarbstoffe, deren Herstellung und Verwendung.**

(30) Priorität : **29.01.82 CH 562/82**

(43) Veröffentlichungstag der Anmeldung : **10.08.83 Patentblatt 83/32**

(45) Bekanntmachung des Hinweises auf die Patenterteilung : **19.08.87 Patentblatt 87/34**

(84) Benannte Vertragsstaaten : **CH DE FR GB LI**

(56) Entgegenhaltungen :
**EP-A- 0 036 582**
**FR-A- 2 430 442**
**FR-A- 2 437 426**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Markert, Jürgen, Dr.**
**Im Guntengarten 32**
**CH-4107 Ettingen (CH)**
Erfinder : **Seiler, Herbert, Dr.**
**Leimgrubenweg 60**
**CH-4125 Riehen (CH)**

**EP 0 085 654 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Reaktivfarbstoffe werden in grossem Umfang für das Färben und Bedrucken von textilen Fasermaterialien eingesetzt. Obwohl heute eine grosse Anzahl von brauchbaren Reaktivfarbstoffen mit unterschiedlichen Eigenschaften und für verschiedene Anwendungsbereiche zur Verfügung steht, kann der erreichte technische Stand, angesichts der hohen Anforderungen in bezug auf Eignung für bestimmte Färbeverfahren und Echtsheitsniveau der Färbungen, vielfach nicht voll befriedigen. Dies gilt auch für Reaktivfarbstoffe im Ausziehfärbeverfahren, besonders bei niedrigen Färbetemperaturen. Die Bereitstellung von verbesserten Reaktivfarbstoffen ist daher dringend erwünscht.

Der vorliegenden Erfindung lag die Aufgabe zugrunde, neue Reaktivfarbstoffe zu finden, die eine besondere Eignung für das Ausziehfärbeverfahren besitzen. Es hat sich gezeigt, dass die weiter unten definierten neuen Reaktivfarbstoffe den gestellten Anforderungen weitgehend entsprechen.

Gegenstand der Erfindung sind Reaktivfarbstoffe der Formel

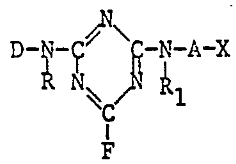

(1),

worin D der Rest eines organischen Farbstoffes, R Wasserstoff oder gegebenenfalls substituiertes $C_{1-4}$-Alkyl, $R_1$ Wasserstoff, Methyl oder Aethyl, A ein gegebenenfalls substituiertes aliphatisches oder aromatisches Brückenglied, X ein Rest

$$-SO_2-C_2H_4-S-SO_3H$$

oder, nur wenn A ein gegebenenfalls substituiertes aromatisches Brückenglied ist, ein Rest

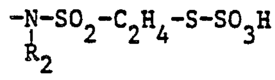

oder

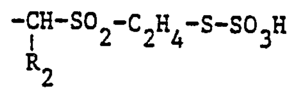

und $R_2$ Wasserstoff, Methyl oder Aethyl ist.

Der Rest D ist insbesondere der Rest eines sulfogruppenhaltigen organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbonimid-Reihe.

Der Rest D in formel (1) kann in der üblichen Art substituiert sein, insbesondere enthält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Aethyl, Propyl, Isopropyl und Butyl, Alkoxygruppen mit 1 bis 4 kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Diejenigen Reaktivfarbstoffe, worin D der Rest eines Azofarbstoffes ist, enthalten als Substituenten insbesondere Methyl, Aethyl, Methoxy, Benzoylamino, Amino, Acetylamino, Ureido, Sulfomethyl, Hydroxy, Carboxy, Halogen und Sulfo.

Als Alkylrest kommt für R in Formel (1) ein geradkettiger oder verzweigter Alkylrest in Betracht, der auch substituiert sein kann, z. B. durch Halogen, Hydroxy, Cyan oder Sulfo. Als beispiele für R seien genannt : Methyl, Aethyl, Propyl, Isopropyl, Butyl, Isobutyl, sek.-Butyl, tert.-Butyl, β-Chloräthyl, β-Hydroxyäthyl, β-Hydroxybutyl, β-Cyanäthyl und Sulfomethyl.

Das aliphatische oder aromatische Brückenglied A ist vorzugsweise ein Alkylen- oder Arylenrest. Der Ausdruck aliphatisches Brückenglied schliesst auch cycloaliphatische Reste ein.

So kann A ein langer (z. B. mit 10 oder mehr Kohlenstoffatomen) oder kürzerer, geradkettiger oder verzweigter Alkylenrest sein ; insbesondere kommt ein Alkylenrest mit 2 bis 6 Kohlenstoffatomen in Betracht, z. B. Aethylen, Propylen, Butylen, Hexylen oder Cyclohexylen.

Als Arylenrest ist A z. B. ein Naphthylenrest, der Rest eines Diphenyls oder Stilbens oder insbesondere ein Phenylenrest. Der Rest A kann weitere Substituenten enthalten, z. B. Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo. Vorzugsweise ist A $C_{2-6}$-Alkylen oder Phenylen.

Bevorzugt ist der Aethylenrest und der Phenylenrest.

Bevorzugte Untergruppen der Reaktivfarbstoffe der Formel (1) sind :

a) Reaktivfarbstoffe der Formel

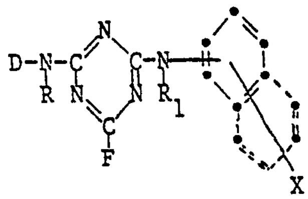

(2),

worin D, R, $R_1$ und X die unter Formel (1) angegebenen Bedeutungen haben, und der Benzol- bzw. Naphthalinrest ausser X weitere Substituenten enthalten kann.

Falls der über das —N($R_1$)-Brückenglied an den s-Triazinring gebundene Rest ein Naphthalinrest ist, kann dieser in α- oder β-Stellung sein.

b) Reaktivfarbstoffe gemäss a), der Formel

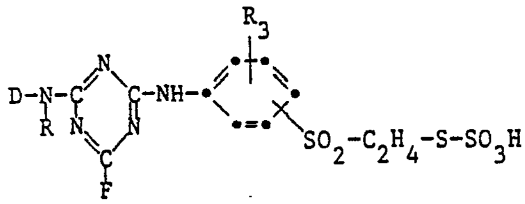

(3),

worin D und R die unter Formel (2) angegebenen Bedeutungen haben, und $R_3$ Wasserstoff, Methyl oder Methoxy ist.

c) Reaktivfarbstoffe der Formel

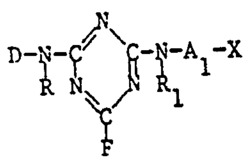

(4),

worin D, R, $R_1$ und X die unter Fornel (1) angegebenen Bedeutungen haben, und $A_1$ $C_{2-6}$-Alkylen ist.

d) Reaktivfarbstoffe gemäss c), der Formel

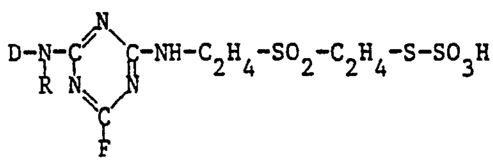

(5),

worin D und R die unter Formel (4) angegebenen Bedeutungen haben.

e) Reaktivfarbstoffe der Formel (1), worin D der Rest eines Mono- oder Disazofarbstoffes ist.

f) Reaktivfarbstoffe der Formel (1), worin D der Rest eines Metallkomplexazo- oder Formazanfarbstoffes ist.

g) Reaktivfarbstoffe der Formel (1), worin D der Rest eines Anthrachinonfarbstoffes ist.

h) Reaktivfarbstoffe gemäss f), worin D der Rest eines Metallkomplexazofarbstoffes der Benzol- oder Naphthalinreihe ist.

i) Reaktivfarbstoffe gemäss h), worin D der Rest eines 1 : 1-Kupferkomplexazofarbstoffes der Benzol- oder Naphthalinreihe ist, und das Kupferatom an jeweils eine metallisierbare Gruppe in ortho-Position zur Azobindung gebunden ist.

j) Reaktivfarbstoffe gemäss e) der Formel

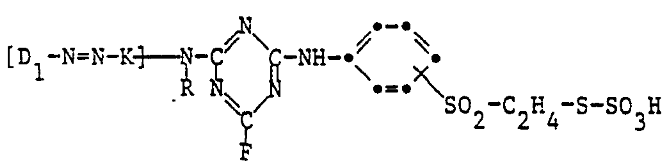

(6),

worin $D_1$ der Rest einer Diazokomponente der Benzol- oder Naphthalinreihe, K der Rest einer

Kupplungskomponente der Benzol- oder Naphthalinreihe oder der heterocyclischen Reihe, und R Wasserstoff oder gegebenenfalls substituiertes $C_{1-4}$-Alkyl ist, und der Reaktivrest an die Diazokomponente oder an die Kupplungskomponente gebunden ist.

k) Reaktivfarbstoffe gemäss j), worin R Wasserstoff, Methyl oder Aethyl ist.

Die Farbstoffe der Formel (1) sind faserreaktiv.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (1) ist dadurch gekennzeichnet, dass man einen organischen Farbstoff der Formel

$$\begin{array}{c} D - \underset{\displaystyle R}{\overset{|}{N}} - H \end{array} \qquad (7)$$

oder ein Farbstoffvorprodukt, 2,4,6-Trifluor-s-triazin und ein Amin der Formel

$$H - \underset{\displaystyle R_1}{\overset{|}{N}} - A - X \qquad (8)$$

kondensiert, wobei D, R, $R_1$, A und X in den Formeln (7) und (8) die unter Formel (1) angegebenen Bedeutungen haben, und dass man im Falle der Verwendung von Farbstoffvorprodukten, die erhaltenen Zwischenverbindungen in die gewünschten Endfarbstoffe umwandelt.

Bei dem im vorangehenden beschriebenen Verfahren können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus.

Dabei hängt es von der Struktur der Ausgangsstoffe, insbesondere der Formeln (7) und (8) ab, welche der möglichen Verfahrensvarianten die besten Resultate ergeben, oder unter welchen speziellen Bedingungen, z. B. bei welcher Kondensationstemperatur, die Reaktion am vorteilhaftesten auszuführen ist.

Eine wichtige Ausführungsform besteht darin, dass man 2,4,6-Trifluor-s-triazin zuerst mit einem organischen Farbstoff der Formel (7) und danach mit einem Amin der Formel (8) kondensiert.

Oder man setzt zunächst 2,4,6-Trifluoro-s-triazin mit einem Amin der Formel (8) um, und kondensiert die erhaltene Difluortriazinverbindung mit einem organischen Farbstoff der Formel (7).

Eine andere Methode besteht darin, zunächst einen Farbstoff herzustellen, der eine Vorstufe des Reaktivrestes enthält, um diese nachträglich in die Endstufe umzuwandeln, z. B. durch Veresterung.

Diejenigen Reaktivfarbstoffe der Formel (1), worin D der Rest eines aus zwei oder mehr als zwei Komponenten zusammengesetzten organischen Farbstoffes ist, können auch nach einer Verfahrensvariante hergestellt werden, bei welcher man von Farbstoffvorprodukten ausgeht. Das geschieht in der Weise, dass man eine Komponente des Farbstoffs der Formel (7), die eine Gruppe —N(R)H enthält, und 2,4,6-Trifluor-s-triazin kondensiert, und in einer geeigneten Stufe des Verfahrens, gegebenenfalls auch vorher, mit einem Amin der Formel (8) und mit der anderen (bzw. den übrigen) Komponente(n) des Farbstoffs der Formel (7) umsetzt, und gegebenenfalls eine andere Umwandlungsreaktion anschliesst.

Beispiele für derartige, aus zwei oder mehr als zwei Komponenten zusammengesetzte organische Farbstoffe sind: Monoazo-, Disazo-, Trisazo-, Tetrazo, Metallkomplexazo-, Formazan- und Azomethinfarbstoffe.

Die oben beschriebene Verfahrensvariante ist vor allem wichtig für die Herstellung von Reaktivfarbstoffen der Formel (1), worin D der Rest eines sulfogruppenhaltigen Azofarbstoffes ist. In diesen kann derjenige Teil des Azofarbstoffrestes, an den der Reaktivrest unmittelbar gebunden ist, entweder der Rest der Diazokomponente oder der Rest der Kupplungskomponente sein. Dadurch ergeben sich zwei wichtige Ausführungsformen der oben beschriebenen Verfahrensvariante.

Die eine der beiden Varianten ist dadurch gekennzeichnet, dass man eine Diazokomponente des Farbstoffes, die eine Gruppe —N(R)H enthält, mit 2,4,6-Trifluor-s-triazin kondensiert, das erhaltene Kondensationsprodukt diazotiert und auf eine Kupplungskomponente kuppelt, und vor oder nach der Kondensation oder nach der Kupplung mit einem Amin der Formel (8) kondensiert und gegebenenfalls eine andere Umwandlungsreaktion anschliesst.

Die zweite Variante ist dadurch gekennzeichnet, dass man eine Kupplungskomponente des Farbstoffs, die eine Gruppe —N(R)H enthält, mit 2,4,6-Trifluor-s-triazin kondensiert, und auf das so erhaltene Kondensationsprodukt eine diazotierte Diazokomponente kuppelt, und vor oder nach der Kondensation oder nach der Kupplung mit einem Amin der Formel (8) kondensiert und gegebenenfalls eine weitere Umwandlungsreaktion anschliesst.

Nach diesen Verfahrensvarianten können Reaktivfarbstoffe der Formel (1), die zwei Reaktivreste

enthalten, hergestellt werden, indem man eine Diazokomponente, die eine Gruppe —N(R)H enthält, mit 2,4,6-Trifluor-s-triazin kondensiert, dass man ferner eine Kupplungskomponente, die eine Gruppe —N(R)H enthält, mit 2,4,6-Trifluor-s-triazin kondensiert und dass man das Kondensationsprodukt der Diazokomponente diazotiert und auf das Kondensationsprodukt der Kupplungskomponente kuppelt, wobei das R im Kondensationsprodukt der Diazokomponente unabhängig ist von dem R im Kondensationsprodukt der Kupplungskomponente, und dass man vor oder nach der Kupplung beide Triazinreste mit Aminen der Formel (8) kondensiert, und gegebenenfalls eine Umwandlungsreaktion anschliesst.

Farbstoffe der Formel (1), die zwei Reaktivreste enthalten, sind auch in der Weise herstellbar, dass man Farbstoffe der Formel (7) verwendet, die in D eine weitere Gruppe —N(R)H enthalten, diese mit einer entsprechenden Menge 2,4,6-Trifluor-s-triazin kondensiert, so dass zwei Fluortriazinreste in das Farbstoffmolekül eingeführt werden, dann mit einer entsprechenden Menge eines Amins der Formel (8) kondensiert und gegebenenfalls acyliert oder dgl.

Vorzugsweise verwendet man als Ausgangsstoffe organische Farbstoffe der Formel (7), worin D der Rest eines Mono- oder Disazofarbstoffes ist.

Vorzugsweise verwendet man ferner Amine der Formel (8), worin A Aethylen oder Phenylen ist.

Eine bevorzugte Ausführungsform ist dadurch gekennzeichnet, dass man organische Farbstoffe der Formel

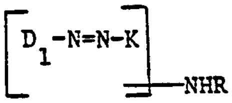 (9),

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, als Ausgangsstoffe verwendet.

Falls die fertigen Reaktivfarbstoffe der Formel (1) komplexbildende Gruppen enthalten, können sie nachträglich mit schwermetallabgebenden Mitteln umgesetzt werden.

Nach einer weiteren bevorzugten Herstellungsweise verwendet man Farbstoffe der Formel (7), worin D der Rest eines Metallkomplexazo- oder Formazanfarbstoffes ist.

Die als Ausgangsstoffe verwendeten Farbstoffe der Formel (7) können im Rest D wie weiter vorn beschrieben substituiert sein. Vorzugsweise geht man von organischen Farbstoffen der Formel (7) aus, worin D der Rest eines Azofarbstoffes ist, der als Substituent Methyl, Aethyl, Methoxy, Benzoylamino, Amino, Acetylamino, Ureido, Sulfomethyl, Hydroxy, Carboxy, Halogen und Sulfo enthalten kann.

Als Amine der Formel (8) verwendet man vorzugsweise die Verbindungen der Formel

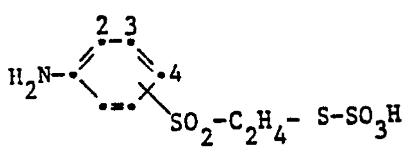 (10)

Die Kondensation des 2,4,6-Trifluor-s-triazins mit den organischen Farbstoffen der Formel (7) bzw. den eine Gruppe -N(R)H enthaltenden diazotierbaren und/oder kupplungsfähigen Komponenten erfolgen vorzugsweise in wässriger Lösung oder Suspensionen, bei niedrigen Temperaturen, vorzugsweise zwischen 0° und 5° C und bei schwach saurem, neutralem bis schwach alkalischem $p_H$-Wert. Vorteilhaft wird der bei der Kondensation freiwerdende Fluorwasserstoff laufend durch Zugabe wässriger Alkalihydroxide, -carbonate oder -bicarbonate neutralisiert. Für die weitere Umsetzung der so erhaltenen Fluortriazinfarbstoffe bzw. für die Umsetzung des 2,4,6-Trifluor-s-triazins mit den Aminen der Formel (8), setzt man die freien Amine oder deren Salze, bevorzugt in Form des Hydrochlorids, ein. Die Umsetzung wird bei Temperaturen etwa zwischen 0 und 40°, bevorzugt zwischen 5 und 25 °C, unter Zusatz säurebindender Mittel, bevorzugt Natriumcarbonat, in einem $p_H$-Bereich von 2 bis 6,5, bevorzugt 5 bis 6,5, durchgeführt.

Die Kondensation des Fluortriazins mit einem Amin der Formel (8) kann vor oder nach der Kondensation des Fluortriazins mit einem Farbstoff der Formel (7) geschehen. Die Kondensation des Fluortriazins mit einem Amin der Formel (8) erfolgt vorzugsweise in wässriger Lösung oder Suspension, bei niedriger Temperatur und bei schwach saurem bis neutralem $p_H$-Wert. Auch hier wird der bei der Kondensation freiwerdende Fluorwasserstoff vorteilhafterweise durch laufende Zugabe von wässrigen Alkalihydroxiden, -carbonaten oder -bicarbonaten neutralisiert.

Im folgenden sollen mögliche Ausgangsstoffe, die zur Herstellung der Reaktivfarbstoffe der Formel (1) verwendet werden können, einzeln genannt werden.

Als Farbstoffe der Formel (7) kommen besonders Farbstoffe der folgenden Strukturtypen in Betracht :

(Siehe Formel Seite 6 f.)

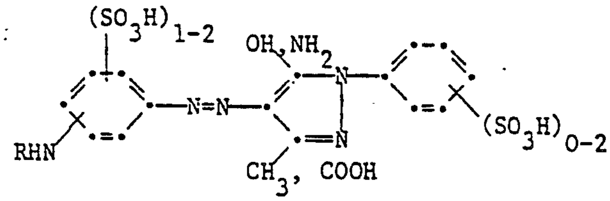

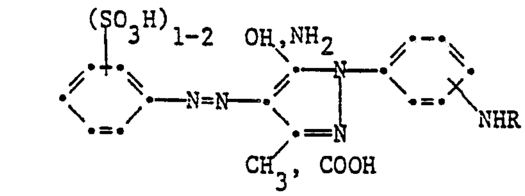

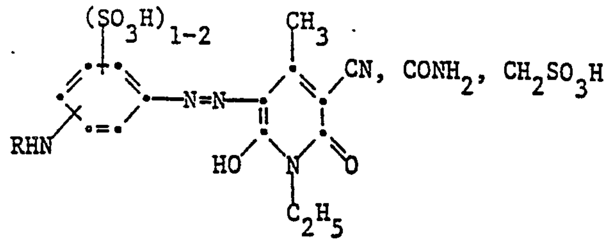

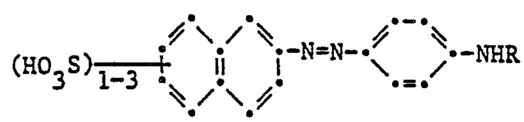

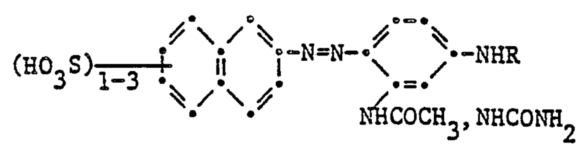

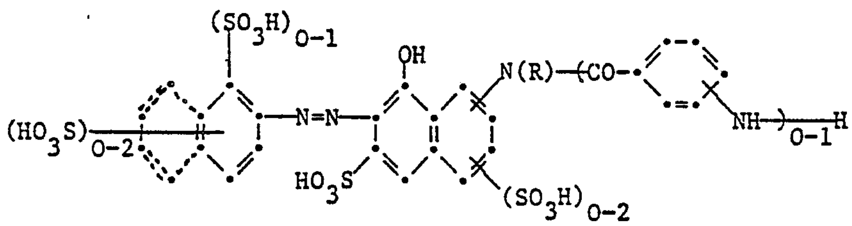

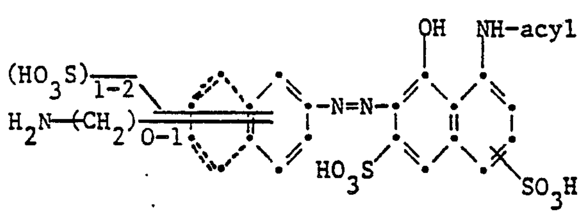

worin acyl z. B. Acetyl oder gegebenenfalls substituiertes Benzoyl ist.

Metallkomplexe von Farbstoffen der Formeln :

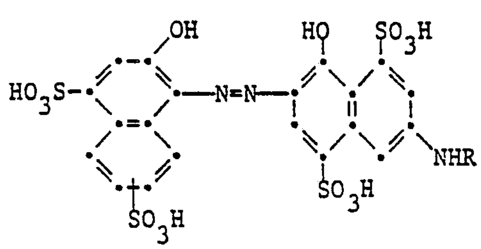

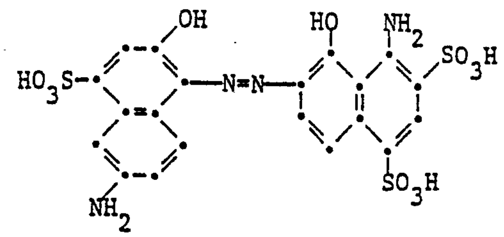

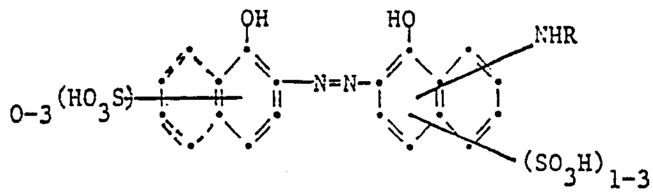

Als Metallatom sind Cu (1 : 1-Komplex) oder Cr und Co (1 : 2-Komplex) bevorzugt. Cr- und Co-Komplexe können die Azoverbindung der oben angegebenen Formel einmal oder zweimal enthalten, d. h. sie können symmetrisch oder mit beliebigen anderen Ligandengruppen unsymmetrisch aufgebaut sein.

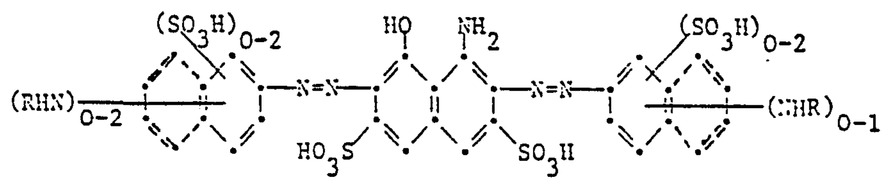

Die durch Strichelungen angedeuteten kondensierten Ringe stehen für alternativ mögliche Naphthalinsysteme.

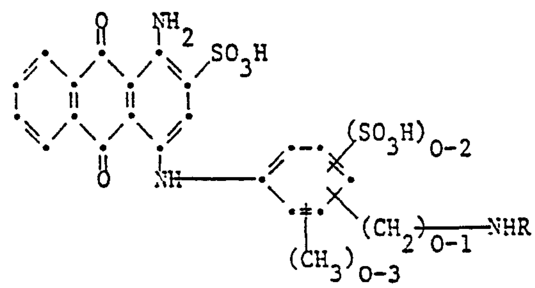

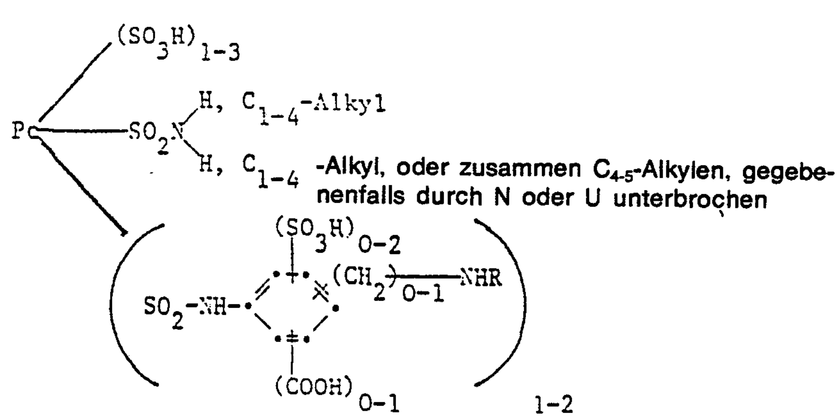


In dieser Formel steht Pc für den Cu- oder Ni-Phthalocyaninrest.
Die Gesamtzahl der Substituenten am Pc-Gerüst ist dabei 4.

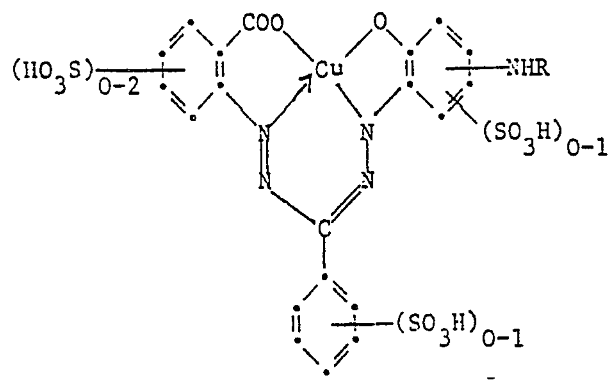

Die Farbstoffe der oben angegebenen Formeln können in den Alkyl- oder Arylresten weitersubstituiert sein, insbesondere durch die bei der Erläuterung von D in Formel (1) genannten Substituenten.

Besonders wichtige Azofarbstoffe der Formel (11) sind die folgenden :

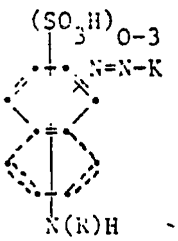

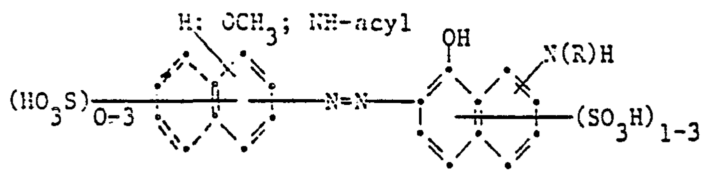

und

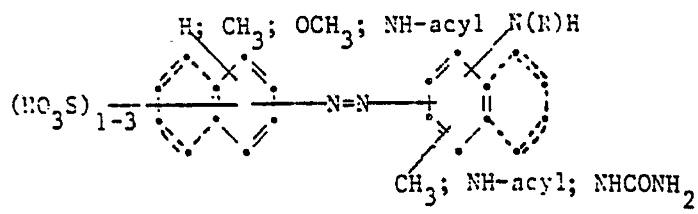

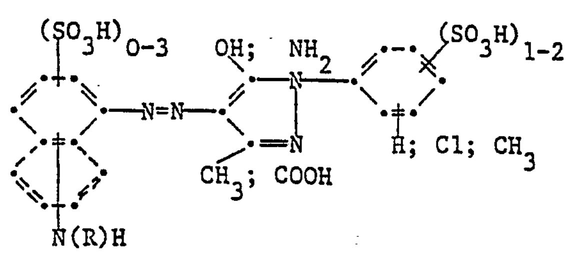

worin K der Rest einer Kupplungskomponente der Benzol-, Naphthalin- oder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und R die bei der Erläuterung der Formel (1) angegebenen Bedeutungen hat, sowie die Metallkomplex-Azofarbstoffe der Formeln

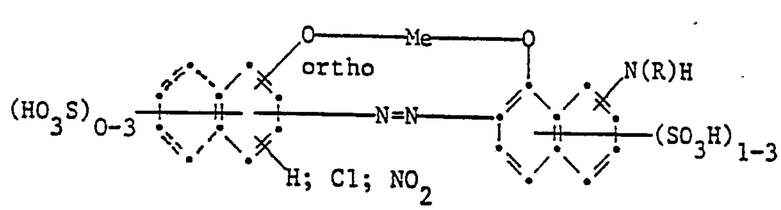

und

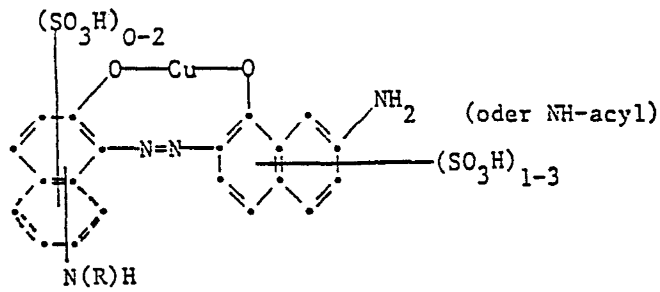

worin R und acyl die oben angegebenen Bedeutungen haben und Me für Cu, Cr oder Co steht.

2,4,6-Trifluor-s-triazin (Cyanurfluorid) oder primäre Kondensationsprodukte des 2,4,6-Trifluor-s-triazins mit den weiter unten genannten Aminen der Formel (8).

Amine der Formel (8) :

1-Aminobenzol-2-(β-thiosulfatoäthyl)-sulfon,
1.-Aminobenzol-3-(β-thiosulfatoäthyl)-sulfon,
1-Amino-4-methylbenzol-3-(β-thiosulfatoäthyl)-sulfon,
1-Amino-4-methoxybenzol-3-(β-thiosulfatoäthyl)-sulfon,
1-Aminobenzol-4(β-thiosulfatoäthyl)-sulfon,
1-Amino-2-chlorbenzol-4-(β-thiosulfatoäthyl)-sulfon,
1-Amino-2-brombenzol-4-(β-thiosulfatoäthyl)-sulfon,
1-Amino-2-methoxybenzol-4-(β-thiosulfatoäthyl)-sulfon,
1-Aminobenzol-2-sulfonsäure-4-(β-thiosulfatoäthyl)-sulfon,
1-Amino-2-methylbenzol-4-(β-thiosulfatoäthyl)-sulfon,
1-Amino-2,5-dimethoxybenzol-4-(β-thiosulfatoäthyl)-sulfon,
2-Aminonaphthalin-6-(β-thiosulfatoäthyl)-sulfon,
1-Aminonaphthalin-4-(β-thiosulfatoäthyl)-sulfon,
2-Aminonaphthalin-8-(β-thiosulfatoäthyl)-sulfon,
2-Aminonaphthalin-6-(β-thiosulfatoäthylsulfonyl)-1-sulfonsäure,
1-Amino-4-(N-methyl-N-β-thiosulfatoäthylsulfonylamino)-benzol,
1-Amino-4-(β-thiosulfatoäthyl-sulfonylmethyl)-benzol,
β-(β-Thiosulfatoäthylsulfonyl)-äthylamin.

Bevorzugt sind 1-Aminobenzol-3- oder 4-(β-thiosulfatoäthyl)-sulfon und β-(β-Thiosulfatoäthylsulfonyl)-äthylamin und deren N-Methylderivate.

Die Amine der Formel (8) können nach an sich bekannten Methoden hergestellt werden, z. B. durch Umsetzung von 1-Aminobenzol-4-(β-sulfatoäthyl)-sulfon mit Natriumthiosulfat in sodaalkalischem Medium.

Geht man zur Herstellung der bevorzugten Reaktivfarbstoffe der Formel (1), worin D der Rest eines Azofarbstoffes ist, nicht von den fertigen Aminofarbstoffen, z. B. solchen die weiter vorn beschrieben sind, sondern von Farbstoffvorprodukten, d. h. den Diazo- und Kupplungskomponenten aus, kommen beispielsweise die folgenden in Betracht :

Diazokomponenten :

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothio-p-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1,3-Diaminobenzol-4-sulfonsäure, 1,4-Diaminobenzol-3-sulfonsäure, 1,4-Diaminobenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder 8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxy-naphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure.

Kupplungskomponenten :

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder 4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure-1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6-bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5-, 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon,1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridon-(2), 1-Aethyl-3-cyan- oder -3-chlor-4-methyl-6-hydroxypyridon-(2), 1-Aethyl-3-sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2)-, 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure.

Geht man von Farbstoffvorprodukten aus, muss mindestens eine der beiden Komponenten, die Diazokomponente oder die Kupplungskomponente eine acylierbare Aminogruppe aufweisen. Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Die Reaktivfarbstoffe der Formel (1) eignen sich zum Färben und Bedrucken von verschiedensten Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

In der FR-A-2.437.426 sind Farbstoffe mit einem Fluortriazinrest beschrieben, an den ein Phenylaminorest gebunden ist, der eine Sulfatoäthylsulfonylgruppe enthält. In der EP-A-36 582 sind ähnliche Halogentriazin-Farbstoffe beschrieben, worin der Phenylaminorest eine Vinylsulfonylgruppe o. ä. enthält. Entsprechende Fluortriazinfarbstoffe, worin der Substituent am Phenylaminorest Thiosulfatoäthylsulfonyl ist, sind in den genannten Veröffentlichungen nicht beschrieben.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Padsteam-Verfahren nur kurze Dämpfzeiten. Sie ergeben Färbungen mit guten Nass- und Lichtechtheiten und hoher Farbstärke und bemerkenswert hoher Faser-Farbstoff-Bindungsstabilität, sowohl in saurem als auch in alkalischem Bereich.

Die Reaktivfarbstoffe der Formel (1) eignen sich besonders zum Färben von Baumwolle nach den Ausziehfärbeverfahren, wobei die Differenz zwischen Ausziehgrad und Fixiergrad bemerkenswert klein, d. h. der Seifverlust sehr gering ist.

Die Reaktivfarbstoffe der Formel (1) eignen sich auch zum Druck, insbesondere auf Baumwolle, ebenso aber auch zum Bedrucken von stickstoffhaltigen Fasern, z. B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

Die Herstellung der Monoazo- oder Disazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile, und die Temperaturen sind in Celsiusgraden angegeben.

## Beispiel 1

17,84 Teile des Farbstoffes der Formel

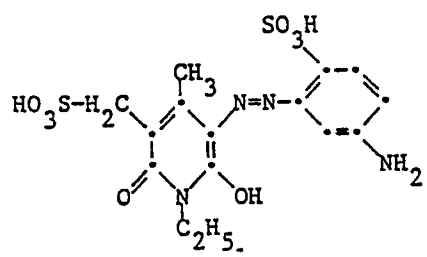

werden in 300 Teilen Wasser neutral gelöst. Man kühlt durch Zugabe von Eis auf 0-3° ab und tropft bei dieser Temperatur innert 10 Minuten 5,67 Teile 2,4,6-Trifluor-1,3,5-triazin zu, wobei man unter gleichzeitiger Zugabe von 2n Natriumhydroxidlösung den pH-Wert der Reaktionslösung bei 6-7 hält. Sobald chromatographisch kein Ausgangsmaterial mehr nachweisbar ist, werden 12,48 Teile 1-Aminobenzol-4-β-thiosulfatoäthylsulfon zugesetzt. Unter ständigem Neutralisieren des freigesetzten Fluorwasserstoffs mit 2n Natriumhydroxidlösung wird ein pH-Wert von 6,0-6,3 eingehalten, wobei man gleichzeitig die Temperatur innert 4 Stunden auf 20-25° ansteigen lässt. Nach beendeter Reaktion wird durch Zugabe von Natriumchlorid ausgesalzen, wobei man den Reaktivfarbstoff der Formel

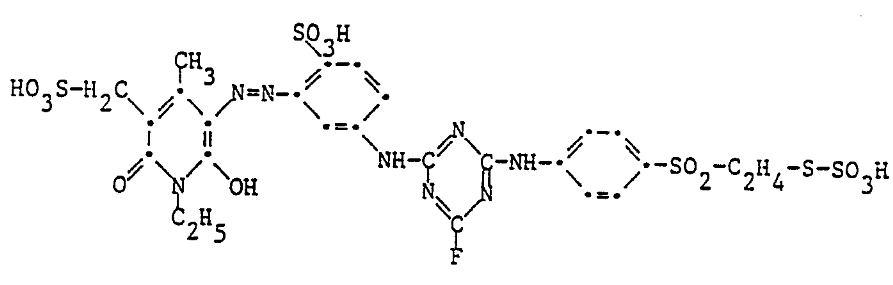

erhält, welcher abfiltriert, mit Salzlösung nachgewaschen und im Vakuum getrocknet wird.

Er stellt ein gelbes Pulver dar, welches Baumwolle und regenerierte Cellulose in klaren grünstichig gelben Tönen färbt.

Das für die Farbstoffkondensation verwendete 1-Aminobenzol-4-β-thiosulfatoäthylsulfon lässt sich z. B. nach der Jap. Patentanmeldung Nr. 7 325 181 herstellen, indem man 1-Aminobenzol-4-β-sulfatoäthylsulfon in sodaalkalischem Medium behandelt und das intermediär gebildete Vinylsulfon mit Natriumthiosulfat zum Thiosulfatoester umsetzt.

## Beispiel 2

Arbeitet man wie im Beispiel 1 beschrieben, ersetzt jedoch das dort verwendete 1-Aminobenzol-4-β-thiosulfatoäthylsulfon durch dieselbe Menge des isomeren 1-Aminobenzol-3-β-thiosulfatoäthylsulfon, so erhält man den Reaktivfarbstoff der Formel

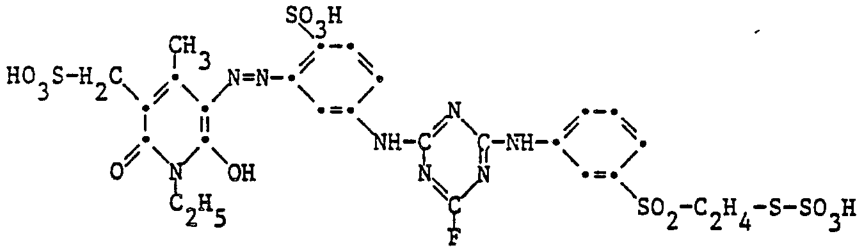

welcher Baumwolle in klaren grünstichig gelben Tönen färbt. Das für die Farbstoffkondensation verwendete 1-Aminobenzol-3-β-thiosulfatoäthylsulfon kann durch Umsetzung von 1-Nitrobenzol-3-vinylsulfon mit Natriumthiosulfat und nachfolgende Reduktion der Nitrogruppe erhalten werden.

Verfährt man wie im Beispiel 1 beschrieben, verwendet jedoch anstelle des dort beschriebenen Aminofarbstoffes äquivalente Mengen der in nachfolgender Tabelle I, Kolonne 1 aufgeführten Aminofarbstoffe, sowie der in Kolonne 2 aufgeführten Amine, so erhält man Reaktivfarbstoffe, welche Baumwolle in den in Kolonne 3 genannten Nuancen färben.

(Siehe Tabellen seite 13 ff.)

Tabelle I

| Nr. | Kolonne 1 | Kolonne 2 | Kolonne 3 |
|---|---|---|---|
| | Aminofarbstoff | Amin | Farbton auf Baumwolle |
| 1 | 2-Aminonaphthalin-1,5-disulfonsäure ⟶ 1-Amino-3-acetylaminobenzol | 1-Aminobenzol-4-β-thiosulfatoäthylsulfon | rotstichig gelb |
| 2 | 2-Aminonaphthalin-1,5-disulfonsäure ⟶ 3-Aminophenylharnstoff | do. | do. |
| 3 | 2-Aminonaphthalin-1,5-disulfonsäure ⟶ 1-Amino-3-hydroxy acetylaminobenzol | do. | do. |
| 4 | 2-Aminonaphthalin-5,7-disulfonsäure ⟶ 1-Amino-3-acetylaminobenzol | do. | do. |
| 5 | 2-Aminonaphthalin-5,7-disulfonsäure ⟶ 3-Aminophenylharnstoff | do. | do. |
| 6 | 2-Aminonaphthalin-4,8-disulfonsäure ⟶ 1-Amino-3-methylbenzol | do. | gelb |
| 7 | 2-Aminonaphthalin-4,8-disulfonsäure ⟶ 1-Amino-3-acetylaminobenzol | do. | do. |
| 8 | 2-Aminonaphthalin-3,6-disulfonsäure ⟶ 1-Amino-3-acetylaminobenzol | do. | rotstichig gelb |
| 9 | 2-Aminonaphthalin-3,6-disulfonsäure ⟶ 3-Aminophenylharnstoff | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 10 | 2-Aminonaphthalin-6,8-disulfonsäure ⟶ 1-Amino-3-acetylaminobenzol | 1-Aminobenzol-3-β-thiosulfatoäthylsulfon | rotstichig gelb |
| 11 | 2-Aminonaphthalin-6,8-disulfonsäure ⟶ 1-Amino-2-methoxynaphthalin-6-sulfonsäure | do. | do. |
| 12 | 2-Aminonaphthalin-3,6,8-trisulfonsäure ⟶ 1-Amino-3-acetylaminobenzol | do. | do. |
| 13 | 2-Aminonaphthalin-3,6,8-trisulfonsäure ⟶ 3-Aminophenylharnstoff | do. | do. |
| 14 | 2-Aminonaphthalin-3,6,8-trisulfonsäure ⟶ 1-Amino-3-methylbenzol | do. | do. |
| 15 | 2-Aminonaphthalin-4,6,8-trisulfonsäure ⟶ 1-Amino-3-methylbenzol | do. | do. |
| 16 | 2-Aminonaphthalin-4,6,8-trisulfonsäure ⟶ 1-Amino-3-acetylaminobenzol | do. | do. |
| 17 | 1-Aminobenzol-2,5-disulfonsäure ⟶ 1-Aminonaphthalin-6-sulfonsäure | do. | do. |
| 18 | 1-Aminobenzol-2,5-disulfonsäure ⟶ 1-Aminonaphthalin-6-sulfonsäure ⟶ 1-Aminonaphthalin-8-sulfonsäure | do. | rotstichig braun |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 19 | 1-Aminonaphthalin-2,5,7-trisulfonsäure → 1-Amino-naphthalin-6-sulfonsäure → 1-Aminonaphthalin-8-sulfonsäure | 1-Aminobenzol-3-β-thio-sulfatoäthylsulfon | violettstichig braun |
| 20 | 1-Aminonaphthalin-2,5,7-trisulfonsäure → 1-Amino-2,5-dimethylbenzol → 1-Aminonaphthalin-6-sulfon-säure | do. | rotstichig braun |
| 21 | 4-Aminoazobenzol-3,4'-disulfonsäure → 1-Aminonaphthalin-6-sulfonsäure | do. | gelbbraun |
| 22 | 1,4-Diaminobenzol-2,5-disulfonsäure → 1-Aethyl-3-sulfomethyl-4-methyl-6-hydroxy-pyridon-(2)-5-carbonsäureamid | do. | gelb |
| 23 | 1-Amino-3-acetylaminobenzol-6-sulfonsäure → 1- Butyl-3-sulfomethyl-4-methyl-6-hydroxy-pyridon-(2)-5-carbonsäureamid (verseift) | do. | do. |
| 24 | 1-Amino-3-acetylaminobenzol-6-sulfonsäure → 1-Aethyl-3-aminocarbonyl-4-methyl-6-hydroxy-pyridon-(2) (verseift) | do. | do. |
| 25 | 1-Amino-3-acetylaminobenzol-6-sulfonsäure → 1-(2',5'-Dichlor-4'-sulfophenyl)-3-methyl-5-pyrazolon (verseift) | do. | do. |

Tabelle I (Fortsetzung)

| Nr. | Kolonne I | Kolonne 2 | Kolonne 3 |
|---|---|---|---|
| | Aminofarbstoff | Amin | Farbton auf Baumwolle |
| 26 | 1-Amino-3-acetylaminobenzol-6-sulfonsäure ⟶ 1-(2',5'-Disulfophenyl)-3-methyl-5-pyrazolon (verseift) | 1-Aminobenzol-3-β-thiosulfatoäthylsulfon | gelb |
| 27 | 1-Amino-3-acetylaminobenzol-6-sulfonsäure ⟶ 1-(4'-Sulfophenyl)-5-pyrazolon-3-carbonsäure (verseift) | do. | do. |
| 28 | 1-Amino-3-acetylaminobenzol-6-sulfonsäure ⟶ 1-(2'-Methyl-4'-sulfophenyl)-5-pyrazolon-3-carbonsäure (verseift) | do. | do. |
| 29 | 1-Amino-3-acetylaminobenzol-6-sulfonsäure ⟶ 1-(4',8'-Disulfonaphthyl-[2'])-3-methyl-5-pyrazolon (verseift) | do. | do. |
| 30 | 1-Aminobenzol-2,5-disulfonsäure ⟶ 1-(3'-Aminophenyl)-3-methyl-5-pyrazolon | do. | do. |
| 31 | 1-Aminobenzol-2,5-disulfonsäure ⟶ 2-Acetylamino-5-hydroxynaphthalin-7-sulfonsäure (verseift) | do. | orange |
| 32 | 1-Aminobenzol-2-sulfonsäure ⟶ 2-Amino-5-hydroxynaphthalin-1,7-disulfonsäure | do. | do. |

Tabelle I (Fortsetzung)

| Nr. | Kolonne I | Kolonne 2 | Kolonne 3 |
|---|---|---|---|
| | Aminofarbstoff | Amin | Farbton auf Baumwolle |
| 33 | 2-Aminonaphthalin-1,5-disulfonsäure ⟶ 2-Acetylamino-5-hydroxynaphthalin-7-sulfonsäure (verseift) | 1-Aminobenzol-3-β-thiosulfatoäthylsulfon | orange |
| 34 | 2-Aminonaphthalin-3,6,8-trisulfonsäure ⟶ 2-Acetylamino-5-hydroxynaphthalin-7-sulfonsäure (verseift) | do. | do. |
| 35 | 2-Aminonaphthalin-1,5,7-trisulfonsäure ⟶ 1-Acetylamino-5-hydroxynaphthalin-7-sulfonsäure (verseift) | do. | do. |
| 36 | 1-Amino-4-methoxybenzol-2,5-disulfonsäure ⟶ 2-Amino-5-hydroxynaphtalin-7-sulfonsäure | do. | scharlach |
| 37 | 1-Amino-4-methoxybenzol-2-sulfonsäure ⟶ 2-Amino-5-hydroxynaphthalin-7-sulfonsäure | do. | do. |
| 38 | 1-Aminobenzol-2-sulfonsäure ⟶ 1-(4'-Nitrobenzoylamino)-8-hydroxynaphthalin-3,6-disulfonsäure (reduziert) | do. | rot |
| 39 | 1-Aminobenzol-2,5-disulfonsäure ⟶ 1-(3'-Nitrobenzoylamino)-8-hydroxynaphthalin-4,6-disulfonsäure (reduziert) | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 40 | 2-Aminonaphthalin-1,5-disulfonsäure → 1-(4'-Nitrobenzoylamino)-8-hydroxynaphthalin-3,6-disulfonsäure (reduziert) | 1-Aminobenzol-4-β-thiosulfatoäthylsulfon | rot |
| 41 | 1-Hydroxy-2-aminobenzol-4-sulfonsäure → 2-Amino-5-hydroxynaphthalin-7-sulfonsäure (Cu-Komplex) | do. | rubin |
| 42 | 1-Hydroxy-2-aminobenzol-4,6-disulfonsäure → 2-Amino-5-hydroxynaphthalin-7-sulfonsäure (Cu-Komplex) | do. | do. |
| 43 | 1-Hydroxy-2-aminobenzol-4,6-disulfonsäure → 2-Aethylamino-5-hydroxynaphthalin-7-sulfonsäure (Cu-Komplex) | do. | do. |
| 44 | 1-Hydroxy-2-aminobenzol-4,6-disulfonsäure → 2-Amino-8-hydroxynaphthalin-3,6-disulfonsäure (Cu-Komplex) | do. | do. |
| 45 | 1-Hydroxy-2-aminobenzol-4,6-disulfonsäure → 1-Amino-8-hydroxynaphthalin-3,6-disulfonsäure (Cu-Komplex) | do. | violett |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 46 | 1-Hydroxy-2-aminobenzol-4,6-disulfonsäure ⟶ 1-Amino-8-hydroxynaphthalin-4,6-disulfonsäure (Cu-Komplex) | 1-Aminobenzol-3-β-thiosulfatoäthylsulfon | violett |
| 47 | 1-Hydroxy-2-amino-4-acetylaminobenzol-6-sulfonsäure ⟶ 1-Amino-8-hydroxynaphthalin-2,4-disulfonsäure (Cu-Komplex) (verseift) | do. | blau |
| 48 | 1-Hydroxy-2-amino-6-acetylaminobenzol-4-sulfonsäure ⟶ 1-Amino-8-hydroxynaphthalin-2,4-disulfonsäure, verseift (Cu-Komplex) | do. | do. |
| 49 | 1-Amino-2-hydroxy-6-nitronaphthalin-4-sulfonsäure ⟶ 1-Amino-8-hydroxynaphthalin-2,4-disulfonsäure, reduziert (Cu-Komplex) | do. | do. |
| 50 | 1-Amino-2-hydroxy-6-nitronaphthalin-4-sulfonsäure ⟶ 1-Amino-8-hydroxynaphthalin-2,4,6-trisulfonsäure, reduziert (Cu-Komplex) | do. | do. |
| 51 | 2-Amino-1-hydroxynaphthalin-4,8-disulfonsäure ⟶ 1-Amino-8-hydroxynaphthalin-3,6-disulfonsäure (Cu-Komplex) | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 52 | 2-Aminonaphthalin-4,8-disulfonsäure ⟶ 2-Hydroxy-3-aminonaphthalin-5,7-disulfonsäure (oxydierend gekupfert) | 1-Aminobenzol-3-β-thiosulfatoäthylsulfon | blau |
| 53 | 3-Methoxy-4-amino-6-methylazobenzol-2',5'-disulfonsäure ⟶ 2-Methylamino-5-hydroxynaphthalin-7-sulfonsäure (entmethylierend gekupfert) | do. | marineblau |
| 54 | 3-Methoxy-4-amino-6-methylazobenzol-2',4'-disulfonsäure ⟶ 2-Amino-5-hydroxynaphthalin-1,7-disulfonsäure (entmethylierend gekupfert) | do. | do. |
| 55 | 1-Amino-3-acetylaminobenzol-6-sulfonsäure ⟶ 1-Amino-8-hydroxy-2-(4'-sulfonphenylazo)-naphthalin-3,6-disulfonsäure (verseift) | do. | blau |
| 56 | 1-Amino-4-(3'-amino-2',4',6'-trimethylphenylamino)-anthrachinon-2,5'-disulfonsäure | do. | do. |
| 57 | 1-Amino-4-(2',6'-dimethyl-3'-aminomethyl-phenylamino)-anthrachinon-2,5'-disulfonsäure | do. | rotstichig blau |
| 58 | 1-Amino-4-(4'-methyl-2'-aminomethyl-phenylamino)-anthrachinon-2,6'-disulfonsäure | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 59 | 1-Amino-4-(5'-amino-phenylamino)-anthrachinon-2,2',4'-trisulfonsäure | 1-Aminobenzol-3-β-thiosulfatoäthylsulfon | blau |
| 60 | 1-Amino-4-(4'-amino-phenylamino)-anthrachinon-2,3'-disulfonsäure | do. | do. |
| 61 | 1-Amino-4-(4'-amino-phenylamino)-anthrachinon-2,2'-disulfonsäure | do. | do. |
| 62 | 1-Amino-4-(3'-amino-phenylamino)-anthrachinon-2,4'-disulfonsäure | do. | do. |
| 63 | 1-Amino-4-(2'-methyl-3'-amino-phenylamino)-anthrachinon-2,5'-disulfonsäure | do. | do. |
| 64 | 1-Amino-4-(2'-methyl-3'-amino-phenylamino)-anthrachinon-2,6,5'-trisulfonsäure | do. | grünstichig blau |
| 65 | 1-Amino-4-(4'-amino-cyclohexylamino)-anthrachinon-2-sulfonsäure | do. | blau |
| 66 | N-(2-Carboxy-4-sulfophenyl)-N'-(2'-hydroxy-3'-amino-5'-sulfophenyl)-ms-phenylformazan (Cu-Komplex) | do. | do. |
| 67 | N-(2-Carboxy-5-sulfophenyl)-N'-(2'-hydroxy-3'-amino-5'-sulfophenyl)-ms-phenylformazan (Cu-Komplex) | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 68 | N-(2-Carboxy-4-sulfophenyl)-N'-(2'-hydroxy-3'-amino-5'-sulfophenyl)-ms-(2"-chlor-5"-sulfophenyl)-formazan (Cu-Komplex) | 1-Aminobenzol-3-β-thiosulfatoäthylsulfon | blau |
| 69 | N-(2-Carboxy-4-aminophenyl)-N'-(2'-hydroxy-3',5'-disulfophenyl)-ms-(3"-sulfophenyl)-formazan (Cu-Komplex) | do. | do. |
| 70 | N-(2-Carboxy-5-sulfophenyl)-N'-(2'-hydroxy-3',5'-disulfophenyl)-ms-(3"-aminophenyl)-formazan (Cu-Komplex) | do. | grünstichig blau |
| 71 | N-(2-Hydroxy-3-amino-5-sulfophenyl)-N'-(2'-hydroxy-4'-sulfophenyl)-ms-(2"-sulfophenyl)-formazan (Cu-Komplex) | do. | marineblau |
| 72 | N-(2-Hydroxy-5-sulfophenyl)-N'-(2'-hydroxy-3',5'-disulfophenyl)-ms-(4"-aminophenyl)-formazan (Cu-Komplex) | do. | blau |
| 73 | N-(2-Hydroxy-5-amino-3-sulfophenyl)-N'-(2',5'-disulfophenyl)-ms-phenylformazan (Cu-Komplex) | do. | do. |
| 74 | N-(2-Hydroxy-4,6-disulfophenyl)-N'-(2',4'-disulfophenyl)-ms-(3"-aminophenyl)-formazan (Cu-Komplex) | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 75 | N-(2-Hydroxy-4-sulfophenyl)-N'-(4'-amino-2'-sulfophenyl)-ms-(4"-chlor-3"-sulfophenyl)-formazan (Cu-Komplex) | 1-Aminobenzol-3-β-thiosulfatoäthylsulfon | blau |
| 76 | CuPc-(3) 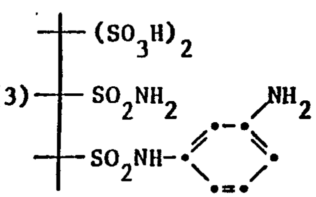 | do. | türkisblau |
| 77 | NiPc-(3) 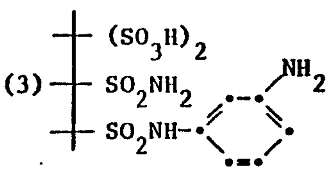 | do. | do. |
| 78 | CuPc-(3) 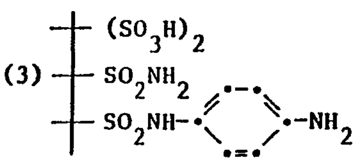 | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 79 | 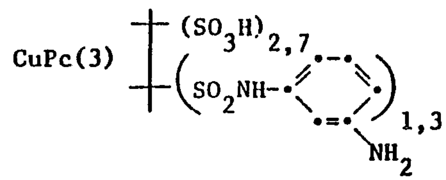 | 1-Aminobenzol-3-β-thiosulfatoäthylsulfon | türkisblau |
| 80 | 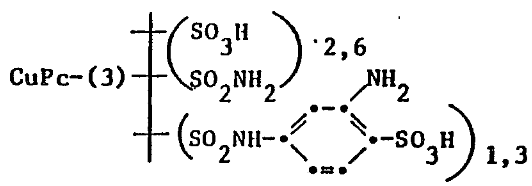 | do. | do. |
| 81 | 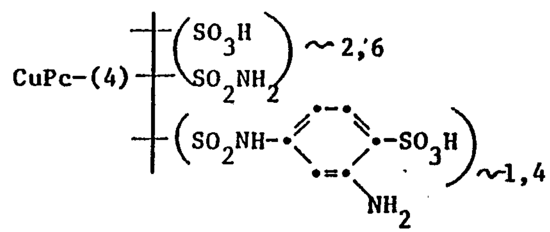 | do. | do. |

Tabelle I (Fortsetzung)

| Nr. | Kolonne 1 | Kolonne 2 | Kolonne 3 |
|---|---|---|---|
| | Aminofarbstoff | Amin | Farbton auf Baumwolle |
| 82 | 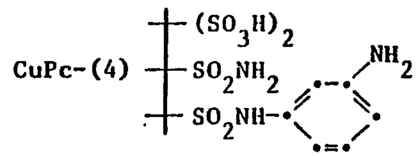 | 1-Aminobenzol-3-β-thio-sulfatoäthylsulfon | türkisblau |
| 83 | 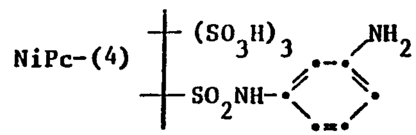 | do. | do. |
| 84 | 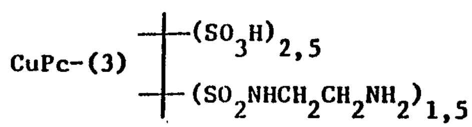 | do. | do. |
| 85 | 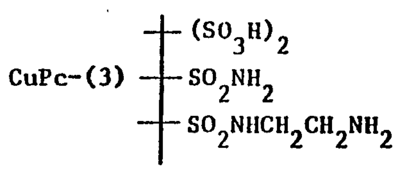 | do. | do. |

Beispiel 3

28,08 Teile des Aminodisazofarbstoffs der Formel

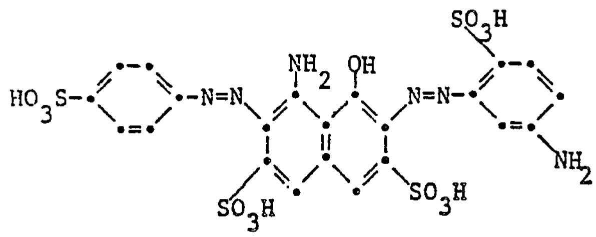

werden in 300 Teilen Wasser neutral gelöst, Man kühlt durch Zugabe von Eis auf 0-3° ab und tropft bei dieser Temperatur innert 10 Minuten 5,67 Teile 2,4,6-Trifluor-1,3,5-triazin zu, wobei der pH-Wert der Reaktionslösung unter gleichzeitiger Zugabe von 2n Natriumhydroxidlösung bei 6-7 gehalten wird. Sobald sich chromatographisch kein Ausgangsmaterial mehr nachweisen lässt, werden 12,48 Teile 1-Aminobenzol-4-β-thiosulfatoäthylsulfon zugesetzt. Man lässt die Temperatur innert 4 Stunden auf 20° und innert weiteren 2 Stunden auf 30° ansteigen, wobei unter gleichzeitiger Zugabe von 2n Natriumhydroxidlösung der pH-Wert bei 6.0-6.3 gehalten wird. Nach Klärfiltration der Farbstofflösung wird mit Kaliumchlorid ausgesalzen, wobei der Reaktivfarbstoff der Formel

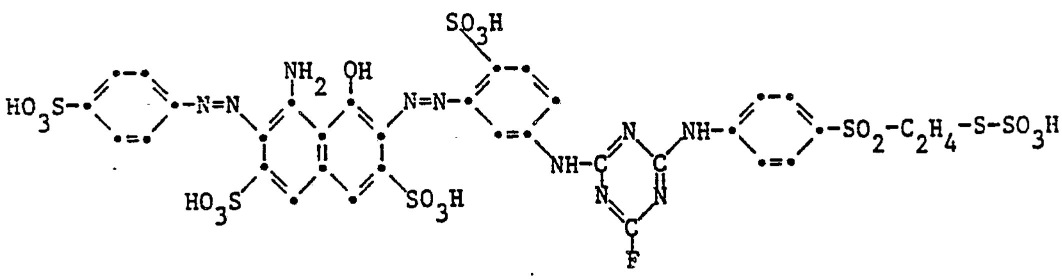

ausfällt. Man filtriert ab, wäscht mit Kaliumchloridlösung nach und trocknet im Vakuum. Der Reaktivfarbstoff wird als dunkelblaues Pulver erhalten, welcher Baumwolle und regenerierte Cellulose in marineblauen Tönen färbt.

Verfährt man wie in Beispiel 3 beschrieben, verwendet jedoch anstelle des dort beschriebenen Aminodisazofarbstoffes äquivalente Mengen der in nachfolgender Tabelle II, Kolonne 1 aufgeführten Aminofarbstoffe, sowie der in Kolonne 2 aufgeführten Amine, so erhält man Reaktivfarbstoffe, welche Baumwolle in den in Kolonne 3 genannten Nuancen färben.

(Siehe Tabellen seite 27 ff.)

Tabelle II

| Nr. | Kolonne 1 | Kolonne 2 | Klonne 3 |
|---|---|---|---|
| | Aminoazofarbstoff | Amin | Farbton auf Raumwolle |
| 1 | 2-Aminonaphthalin-1,5-disulfonsäure ⟶ 1-Amino-3-methylbenzol | 1-Aminobenzol-4-β-thio-sulfatoäthylsulfon | gelb |
| 2 | 2-Aminonaphthalin-1,5-disulfonsäure ⟶ 1-Amino-3-methyl-6-methoxybenzol | do. | rotstichig gelb |
| 3 | 2-Aminonaphthalin-5,7-disulfonsäure ⟶ 1-Amino-3-methylbenzol | do. | do. |
| 4 | 2-Aminonaphthalin-4,8-disulfonsäure ⟶ N-Methylaminobenzol | do. | gelb |
| 5 | 2-Aminonaphthalin-4,8-disulfonsäure ⟶ 1-N-Aethylamino-3-methylbenzol | do. | do. |
| 6 | 2-Aminonaphthalin-3,6,8-trisulfonsäure ⟶ 1-Aminobenzol | do. | rotstichig gelb |
| 7 | 1-Aminonaphthalin-2,5,7-trisulfonsäure ⟶ 1-Amino-3-methyl-6-methoxybenzol ⟶ 1-Amino-naphthalin-8-sulfonsäure | do. | rotstichig braun |
| 8 | 1,4-Diaminobenzol-2,5-disulfonsäure ⟶ 1-Aethyl-3-sulfomethyl-4-methyl-6-hydroxy-pyridon-(2)-5-carbonsäureamid (verseift) | do. | gelb |

Tabelle II (Fortsetzung)

| Nr. | Kolonne 1 | Kolonne 2 | Klonne 3 |
|---|---|---|---|
| | Aminoazofarbstoff | Amin | Farbton auf Baumwolle |
| 9 | 1-Amino-3-acetylaminobenzol-6-sulfonsäure ⟶ 1-Aethyl-3-aminocarbonyl-4-methyl-6-hydroxypyridon-(2) (verseift) | 1-Aminobenzol-4-β-thiosulfatoäthylsulfon | gelb |
| 10 | 1-Amino-3-acetylaminobenzol-6-sulfonsäure ⟶ 1-(4'-Sulfophenyl)-3-methyl-5-pyrazolon (verseift) | do. | do. |
| 11 | 1-Amino-3-acetylamino-6-sulfonsäure ⟶ 1-(5',7'-Disulfonaphthyl-[2'])-3-methyl-5-pyrazolon (verseift) | do. | do. |
| 12 | 1-Aminobenzol-2,4-disulfonsäure ⟶ 2-Acetylamino-5-hydroxynaphthalin-7-sulfonsäure (verseift) | do. | orange |
| 13 | 2-Aminonaphthalin-1,5-disulfonsäure ⟶ 2-Acetylamino-5-hydroxynaphthalin-7-sulfonsäure (verseift) | do. | do. |
| 14 | 1-Amino-4-methoxybenzol-2-sulfonsäure ⟶ 2-Amino-5-hydroxynaphthalin-7-sulfonsäure | do. | scharlach |
| 15 | 2-Aminonaphthalin-1,5-disulfonsäure ⟶ 2-Acetylamino-8-hydroxynaphthalin-6-sulfonsäure (verseift) | do. | gelbstichig rot |

Tabelle II (Fortsetzung)

| Nr. | Kolonne 1 | Kolonne 2 | Klonne 3 |
|---|---|---|---|
| | Aminoazofarbstoff | Amin | Farbton auf Baumwolle |
| 16 | 1-Aminobenzol-2,4-disulfonsäure ⟶ 1-(4'-Nitrobenzoylamino)-8-hydroxynaphthalin-3,6-disulfonsäure (reduziert) | 1-Aminobenzol-4-β-thiosulfatoäthylsulfon | rot |
| 17 | 2-Aminonaphthalin-1,5-disulfonsäure ⟶ 1-(4'Nitrobenzoylamino)-8-hydroxynaphthalin-4,6-disulfonsäure (reduziert | do. | do. |
| 18 | 1-Hydroxy-2-aminobenzol-4,6-disulfonsäure ⟶ 2-Amino-8-hydroxynaphthalin-6-sulfonsäure (Cu-Komplex) | do. | rubin |
| 19 | 1-Hydroxy-2-aminobenzol-5-sulfonsäure ⟶ 1-Amino-8-hydroxynaphthalin-3,6-disulfonsäure (Cu-Komplex) | do. | violett |
| 20 | 1-Amino-2-hydroxy-6-nitronaphthalin-4-sulfonsäure ⟶ 1-Amino-8-hydroxynaphthalin-2,4-disulfonsäure (Cu-Komplex) | do. | blau |
| 21 | 1-Hydroxy-2-amino-4-acetylaminobenzol-6-sulfonsäure ⟶ 1-Amino-8-hydroxynaphthalin-2,4,6-trisulfonsäure (verseift, Cu-Komplex) | 1-Aminobenzol-3-β-thiosulfatoäthylsulfon | blau |
| 22 | 2-Amino-1-methylbenzol-3,5-disulfonsäure ⟶ 1-Amino-2-methoxy-5-methylbenzol ⟶ 2-Methylamino-5-hydroxynaphthalin-7-sulfonsäure (entmethylierend gekupfert) | do. | marineblau |

Tabelle II (Fortsetzung)

| Nr. | Kolonne 1 | Kolonne 2 | Klonne 3 |
|---|---|---|---|
| | Aminoazofarbstoff | Amin | Farbton auf Baumwolle |
| 23 | 1-Amino-3-acetylaminobenzol-6-sulfonsäure ⟶ 1-Amino-8-hydroxy-2-(phenylazo)-naphthalin-3,6-disulfonsäure (verseift) | 1-Aminobenzol-3-β-thiosulfatoäthylsulfon | blau |
| 24 | 1-Amino-3-acetylaminobenzol-6-sulfonsäure ⟶ 1-Amino-8-hydroxy-2-(2',5'-disulfophenylazo)-naphthalin-3,6-disulfonsäure | do. | do. |
| 25 | 1-Aminobenzol-2-sulfonsäure ⟶ 1 Amino-8-hydroxynaphthalin-3,6-disulfonsäure | 1-Aminobenzol-4-β-thiosulfatoäthylsulfon | rot |
| 26 | 1-Aminobenzol-2-sulfonsäure ⟶ 1-Amino-8-hydroxynaphthalin-4,6-disulfonsäure | do. | do. |
| 27 | 1-Amino-4-carboxybenzol-2-sulfonsäure ⟶ 1-Amino-8-hydroxynaphthalin-3,6-disulfonsäure | do. | do. |
| 28 | 1-Amino-4-methylbenzol-2-sulfonsäure ⟶ 1-Amino-8-hydroxynaphthalin-3,6-disulfonsäure | do. | do. |
| 29 | 1-Aminobenzol-2,5-disulfonsäure ⟶ 1-Amino-8-hydroxynaphthalin-3,6-disulfonsäure | do. | do. |
| 30 | 2-Aminonaphthalin-1-sulfonsäure ⟶ 1-Amino-8-hydroxynaphthalin-3,6-disulfonsäure | do. | do. |
| 31 | 2-Aminonaphthalin-1,5-disulfonsäure ⟶ 1-Amino-8-hydroxynaphthalin-4,6-disulfonsäure | do. | do. |

## Tabelle II (Fortsetzung)

| Nr. | Kolonne 1 | Kolonne 2 | Klonne 3 |
|---|---|---|---|
| | Aminoazofarbstoff | Amin | Farbton auf Baumwolle |
| 32 | 2-Aminonaphthalin-1,5,7-trisulfonsäure ——→ 1-Amino-8-hydroxynaphthalin-6-sulfonsäure | 1-Aminobenzol-4-β-thiosulfatoäthylsulfon | rot |
| 33 | 2-Aminonaphthalin-1,5-disulfonsäure ——→ 1-Amino-3-acetylaminobenzol | β-(β-Thiosulfatoäthylsulfonyl)-äthylamin | gelb |
| 34 | 2-Aminonaphthalin-1,5-disulfonsäure ——→ 3-Amino-phenylharnstoff | do. | do. |
| 35 | 2-Aminonaphthalin-1,5-disulfonsäure ——→ 1-Amino-3-hydroxyacetylaminobenzol | do. | do. |
| 36 | 2-Aminonaphthalin-5,7-disulfonsäure ——→ 1-Amino-3-acetylaminobenzol | do. | do. |
| 37 | 2-Aminonaphthalin-5,7-disulfonsäure ——→ 3-Aminophenylharnstoff | do. | do. |
| 38 | 2-Aminonaphthalin-4,8-disulfonsäure ——→ 1-Amino-3-methylbenzol | do. | gelb |
| 39 | 2-Aminonaphthalin-4,8-disulfonsäure ——→ 1-Amino-3-acetylaminobenzol | do. | do. |
| 40 | 2-Aminonaphthalin-3,6-disulfonsäure ——→ 1-Amino-3-acetylaminobenzol | do. | rotstichig gelb |

Tabelle II (Fortsetzung)

| Nr. | Kolonne 1 | Kolonne 2 | Kolonne 3 |
|---|---|---|---|
| | Aminoazofarbstoff | Amin | Farbton auf Baumwolle |
| 41 | 2-Aminonaphthalin-3,6-disulfonsäure ⟶ 3-Aminophenylharnstoff | β-(β-Thiosulfatoäthylsulfonyl)-äthylamin | rotstichig gelb |
| 42 | 1-Aminonaphthalin-2-sulfonsäure ⟶ 1-Amino-8-hydroxynaphthalin-3,6-disulfonsäure | do. | rot |
| 43 | 1-Aminobenzol-2-sulfonsäure ⟶ 1-Amino-8-hydroxynaphthalin-4,6-disulfonsäure | do. | do. |
| 44 | 1-Amino-4-carboxybenzol-2-sulfonsäure ⟶ 1-Amino-8-hydroxynaphthalin-3,6-disulfonsäure | do. | do. |
| 45 | 1-Amino-4-methylbenzol-2-sulfonsäure ⟶ 1-Amino-8-hydroxynaphthalin-3,6-disulfonsäure | do. | do. |
| 46 | 1-Aminobenzol-2,5-disulfonsäure ⟶ 1-Amino-8-hydroxynaphthalin-3,6-disulfonsäure | do. | do. |
| 47 | 2-Aminonaphthalin-1-sulfonsäure ⟶ 1-Amino-8-hydroxynaphthalin-3,6-disulfonsäure | do. | do. |
| 48 | 2-Aminonaphthalin-1,5-disulfonsäure ⟶ 1-Amino-8-hydroxynaphthalin-4,6-disulfonsäure | do. | do. |
| 49 | 2-Aminonaphthalin-1,5,7-trisulfonsäure ⟶ 1-Amino-8-hydroxynaphthalin-6-sulfonsäure | do. | do. |

Tabelle II (Fortsetzung)

| Nr. | Kolonne 1 | Kolonne 2 | Kolonne 3 |
|---|---|---|---|
| | Aminoazofarbstoff | Amin | Farbton auf Baumwolle |
| 50 | 2-Aminonaphthalin-1-sulfonsäure ⟶ 1-Amino-8-hydroxynaphthalin-3,6-disulfonsäure | 1-Amino-2-chlorbenzol-4-β-thiosulfatoäthylsulfon | rot |
| 51 | 2-Aminonaphthalin-1-sulfonsäure ⟶ 1-Amino-8-hydroxynaphthalin-3,6-disulfonsäure | 1-Amino-2-brombenzol-4-β-thiosulfatoäthylsulfon | rot |
| 52 | 2-Aminonaphthalin-1-sulfonsäure ⟶ 1-Amino-8-hydroxynaphthalin-3,6-disulfonsäure | 1-Amino-2-methoxybenzol-4-β-thiosulfatoäthylsulfon | rot |
| 53 | 2-Aminonaphthalin-1-sulfonsäure ⟶ 1-Amino-8-hydroxynaphthalin-3,6-disulfonsäure | 1-Aminobenzol-2-sulfosäure-4-β-thiosulfatoäthylsulfon | rot |
| 54 | 2-Aminonaphthalin-1-sulfonsäure ⟶ 1-Amino-8-hydroxynaphthalin-3,6-disulfonsäure | 1-Amino-2-methylbenzol-4-β-thiosulfatoäthylsulfon | rot |
| 55 | 2-Aminonaphthalin-1-sulfonsäure ⟶ 1-Amino-8-hydroxynaphthalin-3,6-disulfonsäure | 1-Amino-2,5-dimethoxybenzol-4-β-thiosulfatoäthylsulfon | rot |
| 56 | 2-Aminonaphthalin-3,6,8-trisulfonsäure ⟶ 3-Aminophenylharnstoff | 2-Aminonaphthalin-6-β-thiosulfatoäthylsulfon | goldgelb |
| 57 | 2-Aminonaphthalin-3,6,8-trisulfonsäure ⟶ 3-Aminophenylharnstoff | 1-Aminonaphthalin-4-β-thiosulfatoäthylsulfon | goldgelb |

Tabelle II (Fortsetzung)

| Nr. | Kolonne 1 | Kolonne 2 | Kolonne 3 |
|---|---|---|---|
| | **Aminoazofarbstoff** | Amin | Farbton auf Baumwolle |
| 58 | 2-Aminonaphthalin-3,6,8-trisulfonsäure ⟶ 3-Aminophenylharnstoff | 2-Aminonaphthalin-8-β-thiosulfatoäthylsulfon | goldgelb |
| 59 | 2-Aminonaphthalin-3,6,8-trisulfonsäure ⟶ 3-Aminophenylharnstoff | 2-Aminonaphthalin-6-β-thiosulfatoäthylsulfonyl-1-sulfosäure | goldgelb |
| 60 | 2-Aminonaphthalin-1-sulfonsäure ⟶ 1-Amino-8-hydroxynaphthalin-3,6-disulfonsäure | 2-Aminonaphthalin-6-β-thiosulfatoäthylsulfonyl-1-sulfonsäure | rot |
| 61 | 1,4-Diaminobenzol-2,5-disulfonsäure ⟶ 1-Aethyl-3-sulfomethyl-4-methyl-6-hydroxypyridon-(2)-5-carbonamid | 1-Amino-4-(N-methyl-N-β-thiosulfatoäthylsulfonylamino)-benzol | gelb |
| 62 | 1-Amino-3-acetylaminobenzol-6-sulfonsäure ⟶ 1-(4'-sulfophenyl)-3-methyl-5-pyrazolon | 1-Amino-4-(N-methyl-N-β-thiosulfatoäthylsulfonylamino)-benzol | gelb |
| 63 | 2-Aminonaphthalin-1-sulfonsäure ⟶ 1-Amino-8-hydroxynaphthalin-3,6-disulfonsäure | 1-Amino-4-(N-methyl-N-β-thiosulfatoäthylsulfonylamino)-benzol | rot |

**Tabelle II (Fortsetzung)**

| Nr. | Kolonne 1 | Kolonne 2 | Kolonne 3 |
|---|---|---|---|
| | **Aminoazofarbstoff** | Amin | Farbton auf Baumwolle |
| 64 | 1,4-Diaminobenzol-2,5-disulfonsäure ⟶ 1-Aethyl-3-sulfomethyl-4-methyl-6-hydroxy-pyridon-(2)-5-carbonamid | 1-Amino-4-(β-thiosulfatoäthylsulfonylmethyl)-benzol | gelb |
| 65 | 1-Amino-3-acetylaminobenzol-6-sulfonsäure ⟶ 1-(4'-Sulfophenyl)-3-methyl-5-pyrazolon | 1-Amino-4-(β-thiosulfatoäthylsulfonylmethyl)-benzol | gelb |
| 66 | 2-Aminonaphthalin-3,6,8-trisulfonsäure ⟶ 3-Aminophenylharnstoff | 1-Amino-4-(β-thiosulfatoäthylsulfonylmethyl)-benzol | goldgelb |
| 67 | 2-Aminonaphthalin-1-sulfonsäure ⟶ 1-Amino-8-hydroxynaphthalin-3,6-disulfonsäure | 1-Amino-4-(β-thiosulfatoäthylsulfonylmethyl)-benzol | rot |

(1),

Färbevorschift I

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichts zunimmt, und dann getrocknet.

Danach imprägniert man das Gewebe mit einer 20 °C warmen Lösung, die pro Liter 5 Gramm Natriumhydroxyd und 300 Gramm Natriumchlorid enthält, quetscht auf 75 % Gewichtszunahme ab, dämpft die Färbung während 30 Sekunden bei 100 bis 101 °C, spült, seift während einer Viertelstunde in einer 0,3 %igen kochenden Lösung eines ionenfreinen Waschmittels, spült und trocknet.

Färbevorschrift II

2 Teile des gemäss Beispiel 1 erhältlichen Farbstoffes werden in 100 Teilen Wasser gelöst. Die Lösung gibt man zu 1 900 Teilen kaltem Wasser, fügt 60 Teile Natriumchlorid zu und geht mit 100 Teilen eines Baumwollgewebes in dieses Färbebad ein.

Man steigert die Temperatur auf 40 °C, wobei nach 30 Minuten 40 Teile kalzinierte Soda und nochmals 60 Teile Natriumchlorid zugegeben werden. Man hält die Temperatur 30 Minuten auf 40 °C, spült und seift dann die Färbung während 15 Minuten in einer 0,3 %igen kochenden Lösung eines ionenfreien Waschmittels, spült und trocknet.

Statt eines einheitlichen Farbstoffes der Formel (1) können auch Gemische von mehreren Farbstoffen zum Färben verwendet werden, welche einen Farbstoff der Formel (1) enthalten, worin aber die übrigen Mischungskomponenten nicht notwendigerweise unter die Formel (1) fallen müssen.

So erhält man z. B. auf Baumwolle ebenfalls klare grünstichig gelbe Färbungen, wenn man in den oben angegebenen Färbevorschriften statt des Farbstoffes von Beispiel 1, eines Mischung des Farbstoffes von Beispiel 1 mit dem Farbstoff von Beispiel 1 der Deutschen Offenlegungsschrift 29 27 102 im Molverhältnis 1 : 1 einsetzt.

**Patentansprüche**

1. Reaktivfarbstoffe der Formel

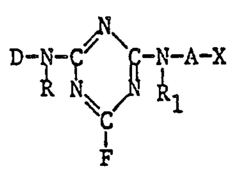

(1)

worin D der Rest eines organischen Farbstoffes, R Wasserstoff oder gegebenenfalls substituiertes $C_{1-4}$-Alkyl, $R_1$ Wasserstoff, Methyl oder Aethyl, A ein gegebenenfalls substituiertes aliphatisches oder aromatisches Brückenglied, X ein Rest

$$—SO_2—C_2H_4—S—SO_3H$$

oder, nur wenn A ein gegebenenfalls substituiertes aromatisches Brükkenglied ist, ein Rest

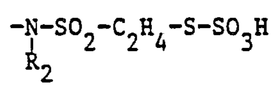 oder 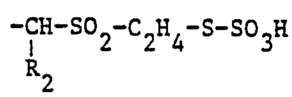

und $R_2$ Wasserstoff, Methyl oder Aethyl ist.

2. Reaktivfarbstoffe gemäss Anspruch 1, worin D der Rest eines sulfogruppenhaltigen organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbonimid-Reihe ist.

3. Reaktivfarbstoffe gemäss Anspruch 1, der Formel

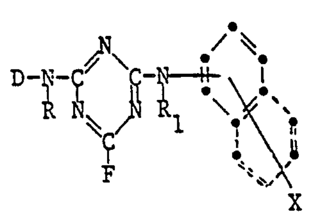

(2),

worin D, R, $R_1$ und X die in Anspruch 1 angegebenen Bedeutungen haben, und der Benzol- bzw.

Naphthalinrest ausser X weitere Substituenten enthalten kann.

4. Reaktivfarbstoffe gemäss Anspruch 3, der Formel

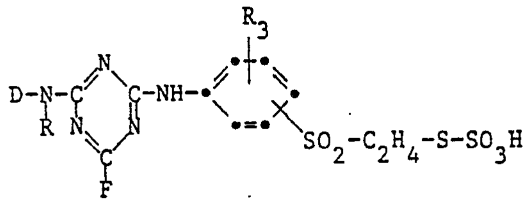

(3),

worin D und R die in Anspruch 3 angegebenen Bedeutungen haben und $R_3$ Wasserstoff, Methyl oder Methoxy ist.

5. Reaktivfarbstoffe gemäss Anspruch 1, der Formel

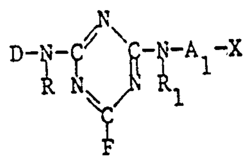

(4),

worin D, R, $R_1$ und X die in Anspruch 1 angegebenen Bedeutungen haben, und $A_1$ $C_{2-6}$-Alkylen ist.

6. Reaktivsfarbstoffe gemäss Anspruch 5, der Formel

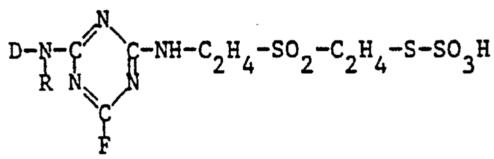

(5),

worin D und R die in Anspruch 5 angegebenen Bedeutungen haben.

7. Reaktivfarbstoffe gemäss Anspruch 1, worin D der Rest eines Mono- oder Disazofarbstoffes ist.

8. Reaktivfarbstoffe gemäss Anspruch 1, worin D der Rest eines Metallkomplexazo- oder Formazanfarbstoffes ist.

9. Reaktivfarbstoffe gemäss Anspruch 1, worin D der Rest eines Anthrachinonfarbstoffes ist.

10. Reaktivfarbstoffe gemäss Anspruch 8, worin D der Rest eines Metallkomplexazofarbstoffes der Benzol- oder Naphthalinreihe ist.

11. Reaktivfarbstoffe gemäss Anspruch 10, worin D der Rest eines 1 : 1-Kupferkomplexazofarbstoffes der Benzol- oder Naphthalinreihe ist, und das Kupferatom an jeweils eine metallisierbare Gruppe in ortho-Position zur Azobindung gebunden ist.

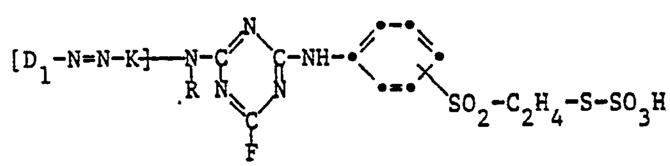

(6),

worin $D_1$ der Rest einer Diazokomponente der Benzol- oder Naphthalinreihe, K der Rest einer Kupplungskomponente der Benzol- oder Naphthalinreihe oder der heterocyclischen Reihe, und R Wasserstoff oder gegebenenfalls substituiertes $C_{1-4}$-Alkyl ist, und der Reaktivrest an die Diazokomponente oder an die Kupplungskomponente gebunden ist.

13. Reaktivfarbstoffe gemäss Anspruch 12, worin R Wasserstoff, Methyl oder Aethyl ist.

14. Verfahren zur Herstellung von Reaktivfarbstoffen gemäss Anspruch 1, dadurch gekennzeichnet, dass man einen organischen Farbstoff der Formel

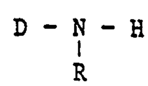

(7)

oder ein Farbstoffvorprodukt, 2,4,6-Trifluor-s-triazin und ein Amin der Formel

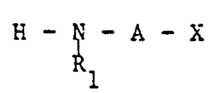

(8)

kondensiert, wobei D, R, $R_1$, A und X in den oben genannten Formeln die in Anspruch 1 angegebenen Bedeutungen haben, und dass man im Falle der Verwendung von Farbstoffvorprodukten, die erhaltenen Zwischenverbindungen in die gewünschten Endfarbstoffe umwandelt.

15. Verwendung der Reaktivfarbstoffe gemäss der Ansprüchen 1 bis 13, bzw. der gemäss Anspruch 14 erhaltenen Reaktivfarbstoffe zum Färben und Bedrucken.

16. Verwendung gemäss Anspruch 15 zum Färben von Cellulosefasern.

**Claims**

1. A reactive dye of the formula

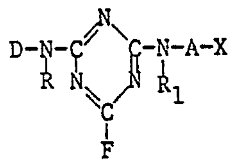

(1),

wherein D is the radical of an organic dye, R is hydrogen or unsubstituted or substituted $C_1$-$C_4$ alkyl, $R_1$ is hydrogen, methyl or ethyl, A is an unsubstituted or substituted aliphatic or aromatic bridge member, X is a radical

$$—SO_2—C_2H_4—S—SO_3H$$

or, only if A is an unsubstituted or substituted aromatic bridge member, is a radical

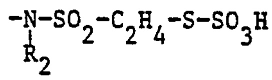

or

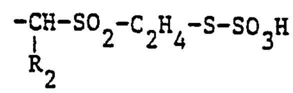

and $R_2$ is hydrogen, methyl or ethyl.

2. A reactive dye according to claim 1, wherein D is the radical of an organic dye containing sulfo groups, of the monoazo or polyazo, metal complex azo, anthraquinone, phthalocyanine, formazane, azomethine, dioxazine, phenazine, stilbene, triphenylmethane, xanthene, thioxanthone, nitroaryl, naphthoquinone, pyrenequinone or perylenetetracarboximide series.

3. A reactive dye according to claim 1 of the formula

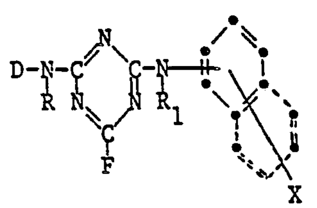

(2),

wherein D, R, $R_1$ and X are as defined in claim 1, and the benzene or naphthalene radical may contain further substituents in addition to X.

4. A reactive dye according to claim 3 of the formula

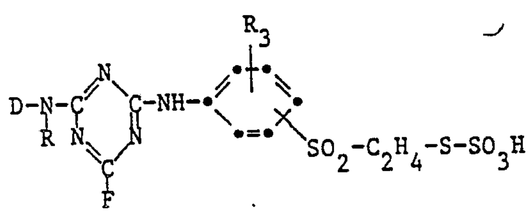

(3),

wherein D and R are as defined in claim 3 and $R_3$ is hydrogen, methyl or methoxy.

5. A reactive dye according to claim 1 of the formula

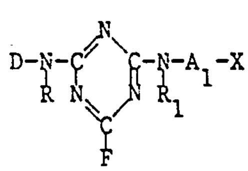

(4),

wherein D, R, $R_1$ and X are as defined in claim 1 and A is $C_2$-$C_6$ alkylene.

6. A reactive dye according to claim 5 of the formula

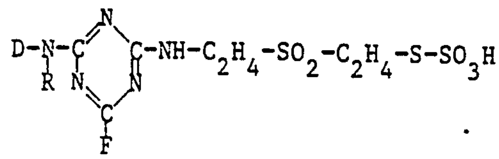

(5),

wherein D and R are as defined in claim 5.

7. A reactive dye according to claim 1, wherein D is the radical of a monoazo or disazo dye.

8. A reactive dye according to claim 1, wherein D is the radical of a metal complex azo dye or of a formazane dye.

9. A reactive dye according to claim 1, wherein D is the radical of an anthraquinone dye.

10. A reactive dye according to claim 8, wherein D is the radical of a metal complex azo dye of the benzene or naphthalene series.

11. A reactive dye according to claim 10, wherein D is the radical of a 1 : 1 copper complex azo dye of the benzene or naphthalene series and the copper atom is attached in each case to a metallisable group in the ortho-position to the azo bond.

12. A reactive dye according to claim 7 of the formula

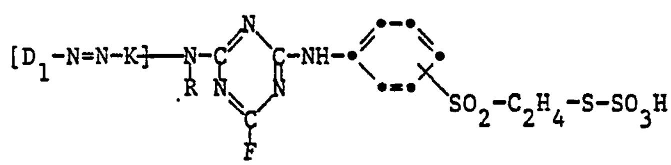

(6),

wherein $D_1$ is the radical of a diazo component of the benzene or naphthalene series, K is the radical of a coupling component of the benzene, naphthalene or heterocyclic series, and R is hydrogen or unsubstituted or substituted $C_1$-$C_4$ alkyl, and the reactive radical is attached to the diazo component or to the coupling component.

13. A reactive dye according to claim 12, wherein R is hydrogen, methyl or ethyl.

14. A process for the preparation of a reactive dye according to claim 1, which comprises condensing an organic dye of the formula

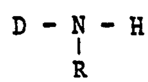

(7)

or a dyestuff precursor, 2,4,6-trifluoro-s-triazine and an amine of the formula

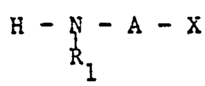

(8)

in which formulae above D, R, $R_1$, A and X are as defined in claim 1, and, if a dyestuff precursor is used, converting the intermediate so obtained into the desired final dye.

15. A process for dyeing and printing which comprises the use of a reactive dye according to any one of claims 1 to 13 or obtained according to claim 14.

16. A process according to claim 15 for dyeing cellulose fibres.

**Revendications**

1. Colorants réactifs répondant à la formule

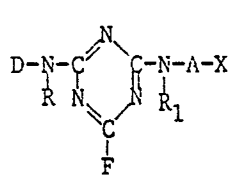

(1),

dans laquelle D est le résidu d'un colorant organique, R est un hydrogène ou un radical alkyle en $C_1$ à $C_4$ éventuellement substitué, $R_1$ est un hydrogène ou un groupe méthyle ou éthyle, A est un élément de pontage aliphatique ou aromatique substitué le cas échéant, X est un radical

$$—SO_2—C_2H_4—S—SO_3H$$

ou, seulement lorsque A est un élément de pontage aromatique éventuellement substitué, un radical

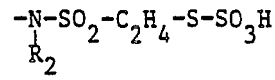 ou 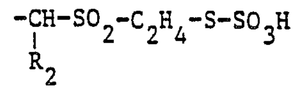

et $R_2$ est un hydrogène ou un groupe méthyle ou éthyle.

2. Colorants réactifs selon la revendication 1, dans lesquels D désigne le résidu d'un colorant organique contenant des groupes sulfo de la série des colorants mono- ou polyazoïques, des colorants azoïques à complexe métallique, des colorants anthraquinoniques, des colorants phtalocyanines, des colorants formazaniques, des colorants azométhiniques, des colorants dioxaziniques, des colorants phénaziniques, des colorants stilbéniques, des colorants triphénylméthaniques, des colorants xanthéniques, des colorants thioxanthoniques, des colorants nitroaryliques, des colorants naphtoquinoniques, des colorants pyrènequinoniques ou des colorants pérylènetétracarbonimidiques.

3. Colorants réactifs selon la revendication 1, répondant à la formule

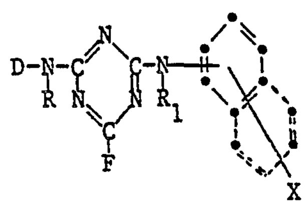 (2),

dans laquelle D, R, $R_1$ et X ont les significations indiquées dans la revendication 1, et le radical benzène ou naphtalène peut contenir d'autres substituants que X.

4. Colorants réactifs selon la revendication 3, répondant à la formule

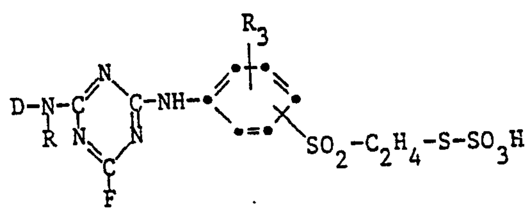 (3),

dans laquelle D et R ont les significations indiquées dans la revendication 3 et $R_3$ désigne un hydrogène ou un groupe méthyle ou méthoxy.

5. Colorants réactifs selon la revendication 1, répondant à la formule

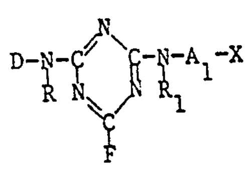 (4),

dans laquelle D, R, $R_1$ et X ont les significations indiquées dans la revendication 1 et $A_1$ est un groupe alkylène en $C_2$ à $C_6$.

6. Colorants réactifs selon la revendication 5, répondant à la formule

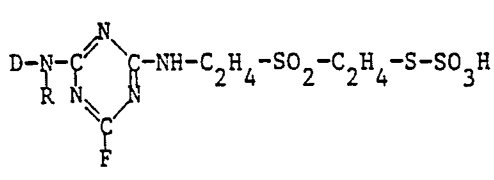 (5),

dans laquelle D et R ont les significations indiquées dans la revendication 5.

7. Colorants réactifs selon la revendication 1, dans lesquels D est le résidu d'un colorant mono- ou disazoïque.

8. Colorants réactifs selon la revendication 1, dans lesquels D est le résidu d'un colorant azoïque à complexe métallique ou formazanique.

9. Colorants réactifs selon la revendication 1, dans lesquels D est le résidu d'un colorant anthraquinonique.

10. Colorants réactifs selon la revendication 8, dans lesquels D est le résidu d'un colorant azoïque à complexe métallique de la série du benzène ou du naphtalène.

11. Colorants réactifs selon la revendication 10, dans lesquels D est le résidu d'un colorant azoïque à complexe de cuivre 1 : 1 de la série du benzène ou du naphtalène, et l'atome de cuivre est lié à des groupes métallisables situés chacun en position ortho par rapport à la liaison azoïque.

12. Colorants réactifs selon la revendication 7, répondant à la formule

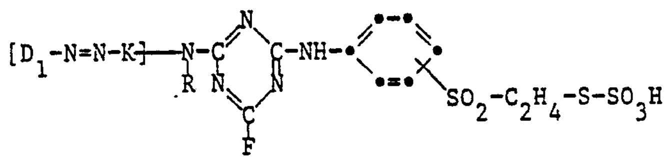

(6),

dans laquelle $D^1$ est le résidu d'un constituant diazo de la série du benzène ou du naphtalène, K est le résidu d'un constituant de copulation de la série du benzène ou du naphtalène ou de la série hétérocyclique et R est un hydrogène ou un groupe alkyle en $C_1$ à $C_4$ éventuellement substitué, et le radical réactif est lié au constituant diazo ou au constituant de copulation.

13. Colorants réactifs selon la revendication 12, dans lesquels R est un hydrogène ou un groupe méthyle ou éthyle.

14. Procédé de préparation de colorants réactifs selon la revendication 1, caractérisé par le fait qu'on condense un colorant organique répondant à la formule

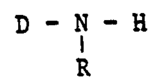

(7)

ou un précurseur du colorant, la 2,4,6-trifluoro-s-triazine et une amine répondant à la formule

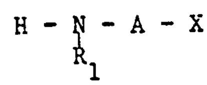

(8)

D, R, $R_1$, A et X ayant les significations indiquées dans les formules précitées de la revendication 1, et par le fait que, dans le cas de l'utilisation de précurseurs du colorant, on transforme les composés intermédiaires obtenus en les colorants finaux souhaités.

15. Utilisation des colorants réactifs selon les revendications 1 à 13 ou des colorants réactifs obtenus selon la revendication 14 pour la teinture et l'impression.

16. Utilisation selon la revendication 15 pour la teinture de fibres cellulosiques.